# EUROPÄISCHE PATENTSCHRIFT

(11) **EP 0 962 299 B1**
(45) Veröffentlichungstag und Bekanntmachung des Hinweises auf die Patenterteilung: **03.04.2002**
(21) Anmeldenummer: 99109510.0
(22) Anmeldetag: 12.05.1999
(51) Int. Cl.: B29C 47/68, B01D 35/12

(54) **Schmelzeventil**
Valve for melted thermoplastic material
Soupape pour matière fondue thermoplastique

(30) Priorität: 04.06.1998 DE 19824902
(43) Veröffentlichungstag der Anmeldung: 08.12.1999
(73) Patentinhaber: LINDAUER DORNIER GESELLSCHAFT M.B.H, 88129 Lindau (DE)
(72) Erfinder: Rutz, Andreas Dr., 88131 Lindau (DE); Müller, Friedrich, 42899 Remscheid (DE); Bock, Udo, 8600 Dübendorf (CH)

(56) Entgegenhaltungen:
- DE-A- 4 407 941
- GB-A- 1 455 611
- US-A- 5 462 653
- US-A- 5 536 399

## Beschreibung

Die Erfindung betrifft ein Schmelzeventil nach dem Oberbegriff des Patentanspruches 1.

Solche Schmelzeventile werden in der Extrusionstechnik vorrangig bei Großflächenschmelzefiltern eingesetzt und haben dort als Dreiwegeventile die Aufgabe, den Eintritt der Schmelze in die jeweilige Filterkammer und den Austritt aus dieser Filterkammer zu steuern.

Bei Doppelschmelzefiltern befindet sich eine Filterkammer im Arbeitsprozess, während die andere Filterkammer gereinigt und mit einem neuen Filter bestückt wird. Der verbrauchte Filter wird in einem speziell dafür vorgesehenen Raum gereinigt und wiederaufbereitet.

Das Ansteuern der beiden Filterkammern wird üblicherweise durch die beiden Dreiwegeventile bewerkstelligt, welche in den Ausführungsformen mit einfachem Hahnküken (zylindrisch oder konisch), Doppelhahnküken (zylindrisch oder konisch), Schieberventile in Plattenbauweise oder Schieberventile mit zylindrischem Stößel eingesetzt werden.

Schieberventile haben den Nachteil einer ungünstigen Strömungsführung der Schmelze und zudem lange Schmelzewege gegenüber den Kükenausführungen, was auch Probleme bei der Reinigung aufwirft.

Die bisher bekannten Hahnküken mit Drehantrieb in Achsrichtung besitzen keinen koaxial zur Drehachse des Hahnkükens verlaufenden Schmelzeeintritt jedoch einen rechtwinklig zur Drehachse des Hahnkükens verlaufenden Schmelzeaustritt. Die bekannten Hahnküken haben bei üblichem senkrechtem Filtereinbau den Nachteil, dass jeweils ein Ventilantrieb von der Oberseite und der Unterseite der Filter notwendig ist, und somit eine Synchronisierung beider Ventile durch beispielsweise eine fest verbundene Welle, meist wegen des hohen Drehmoments und der entgegengesetzten Drehrichtung, nicht möglich ist. Zudem ist besonders unterhalb der Filter der Platz begrenzt und daher ergeben sich bei der Verwendung herkömmlicher Bauarten von Schmelzeventilen mit axialem Drehantrieb Nachteile in der Bedienung der Anlage.

Bei Doppelhahnküken wird sowohl der Schmelzeeintritt, wie auch der Schmelzeaustritt durch ein einziges Küken erreicht, wodurch sich zwar Bedienungsvorteile ergeben, jedoch die zuführenden Schmelzekanäle und Schmelzeleitungen wesentlich länger sind und daher der zusätzliche Reinigungsaufwand erhöht wird.

Aus DE 44 07 941 A1 ist eine aus einem ersten Filtergehäuse mit Filter und eine aus einem zweiten Filtergehäuse mit Filter bestehende Filtervorrichtung bekannt
Ein der Filtervorrichtung eingangseitig vorgeordnetes Umschaltventil und ein der Filtervorrichtung ausgangseitig nachgeordnetes Umschaltventil dient dem wahlweisen Leiten des zu filternden Mediums entweder in das erste Filtergehäuse oder in das zweite Filtergehäuse und umgekehrt.
Die Umschaltventile besitzen von deren Eingang bis zu deren Ausgang einen relativ langen Strömungskanal, der dann den Reinigungsprozess erschwert, wenn das Umschaltventil als Ventil für thermoplastische Schmelzen verwendet werden soll.
Die Umschaltventile sowie deren wesentliche Antriebsübertragungsmittel sind in einem Heizkasten aufgenommen, so dass diese permanent der Wärme des Heizkastens ausgesetzt sind.
Ein weiterer Nachteil der Umschaltventile besteht darin, dass es nicht möglich ist, nach dem Reinigungsprozess des einen gereinigten Filters dieses Filter vorzufluten, ohne den Fluss des strömenden Mediums durch das andere Filter zu unterbrechen.
Diese Vorgehensweise ist insbesondere von besonderer Bedeutung bei der kontiniuerlichen Produktion von thermoplastischen Folien.

Der vorliegenden Erfindung liegt die Aufgabe zugrunde, oben angeführte Nachteile zu verringern oder völlig zu vermeiden.

Hierbei soll ein Schmelzeventil so weitergebildet werden, dass zum einen die Schmelzewege zur besseren Reinigungsmöglichkeit kurz gehalten werden, und zum anderen soll der Antrieb des Hahnkükens weitgehend außerhalb von auftretender Wärmestrahlung der Schmelzefilter angeordnet sein.

Zur Lösung der oben genannten Aufgabe dient die technische Lehre des Hauptanspruches 1.

Wesentliches Merkmal hierbei ist, dass ein Schmelzeventil mit einfachem Hahnküken verwendet wird, bei dem der Schmelzeeingang zur Drehachse des Hahnkükens koaxial angeordnet ist und dass vom zuströmseitigen Abschnitt des Hahnkükens Vorflutbohrungen ausgehen, die bei vorgegebener Stellung des Hahnkükens gleichzeitig den ersten Schmelzeausgang und den zweiten Schmelzeausgang des Ventilgehäuses mit dem zuströmseitigen Abschnitt des Küken-Strömungskanals verbinden.

Die Abdichtung des relativ großen Schmelzekanals wird dabei durch eine Spezialpackung und eine zusätzliche, sich verjüngende Dichtlippe am Eintrittsstutzen gelöst. Diese Dichtlippe hat zudem die Eigenschaft, dass sie bei steigendem Schmelzedruck eine höhere Flächenpressung auf die Dichtkante bewirkt. Der entstehende zusätzliche Axialdruck wird durch ein handelsübliches Axiallager aufgefangen, welches bei der geringen Drehbewegung mit einer einmaligen Hochtemperatur-Fettfüllung dauergeschmiert wird.

Durch die engen Spalte zwischen Küken und Gehäuse kommt der Oberflächenbehandlung der gleitenden Flächen eine besondere Behandlung zu. Dazu wird das Küken mit einem Hartstoff im Mikrobereich beschichtet und das Gehäuse nitriert. Dadurch wird eine gute Sicherheit gegen Fressen und Festsetzen des Kükens im Gehäuse erreicht.

Zusätzlich dazu ist zur Verhinderung gegen Fressen und Festsetzen des Kükens im Gehäuse erfindungsgemäß vorgesehen, dass das Küken ständig oder in bestimmten zeitlichen Abständen um einige Winkelminuten motorisch bewegt wird. Die Gefahr des Fressens und Festsetzens besteht besonders nach längerer Betriebszeit ohne Filterwechsel.

Beim Schaltprozess ist es notwendig, dass der Schmelzekanal durch geringe Verdrehung des Kükens sowohl die momentane Flussrichtung noch auf lässt, als auch die Flussrichtung in dem gereinigten Filter schon etwas öffnet, wodurch das neue Filter mit Kunststoffschmelze geflutet wird, ohne dass der Produktionsprozess unterbrochen wird. Dies wird dadurch erreicht, dass entsprechend dimensionierte Schmelzekanäle so angeordnet werden, dass eine Teilüberdeckung von beiden Schmelzeaustrittskanälen möglich ist. Der Umschaltprozess von verbrauchtem nach gereinigtem Filter wird dann bei vollständig gefülltem und entlüftetem neuem Schmelzefilter zu Ende geführt.

Die Vorteile der vorliegenden Erfindung sind kurze Schmelzwege und die optimale seitliche Anordnung des Ventilantriebs.

Dabei ist sichergestellt, dass der Antrieb gut bedienbar ist, was sowohl für das obere, wie auch für das untere Ventil gilt. So lässt sich der Ventilantrieb in einem Bereich anordnen, in dem die relativ hohen Verarbeitungstemperaturen der Kunststoffschmelze kaum Einfluss haben.

Weiterer Vorteil ist, dass die erfindungsgemäßen Schmelzeventile mit seitlich angeordnetem Ventilantrieb sowohl elektrische oder pneumatische, als auch durch Handantriebe mit handelsüblichen Drehmomentverstärkern betrieben werden können.

Bei der vorliegenden Erfindung ist es also durch die seitliche Anordnung der Ventilantriebe möglich sowohl unterschiedliche Schaltintervalle und Drehrichtungen der Ventile zuzulassen als auch eine Synchronschaltung der Antriebe.

Ein weiterer Vorteil des Schmelzeventils gemäß der Erfindung besteht darin, dass beide austretenden Schmelzekanäle geschlossen werden können und das Öffnen und Schließen einer Spülbohrung ermöglicht wird.

Figur 1 zeigt das erfindungsgemäße Schmelzeventil in einer bevorzugten Ausführungsform.

Figur 2 zeigt das Schmelzeventil in einem Querschnitt durch das Gehäuse und das Hahnküken.

Figur 3 zeigt das Schmelzeventil mit zum Vorfluten geschwenktem Küken.

Figur 4 zeigt das Schmelzeventil in einer Stellung, in der das Küken so geschwenkt ist, dass die Entlüftungs- bzw. Spülbohrung geöffnet ist.

Figur 5 zeigt das Schmelzeventil in der Stellung des Kükens, bei dem alle Kanäle verschlossen sind.

Figur 6 zeigt einen Querschnitt durch das Gehäuse und das Hahnküken in einer anderen Ausführungsform des Ventils mit vier Ausgängen.

Figur 7 zeigt einen Querschnitt durch das Gehäuse und das Hahnküken in einer weiteren Ausführungsform des Ventils mit vier Ausgängen.

Figur 8 zeigt einen Querschnitt durch das Gehäuse und das Hahnküken in einer weiteren Ausführungsform des Ventils mit vier Ausgängen im Gehäuse und Doppelauslass im Küken.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

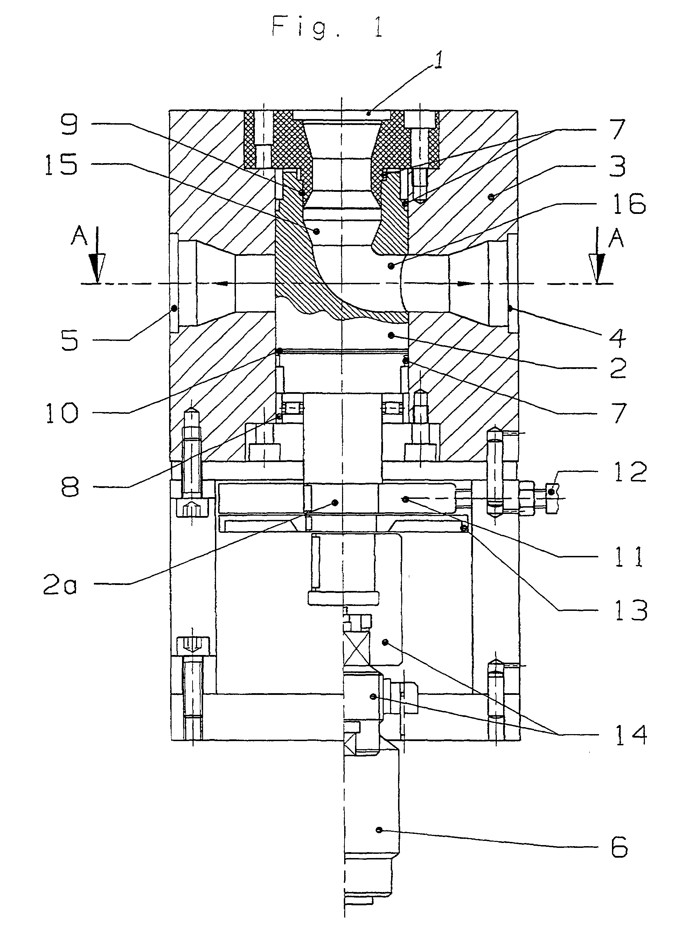

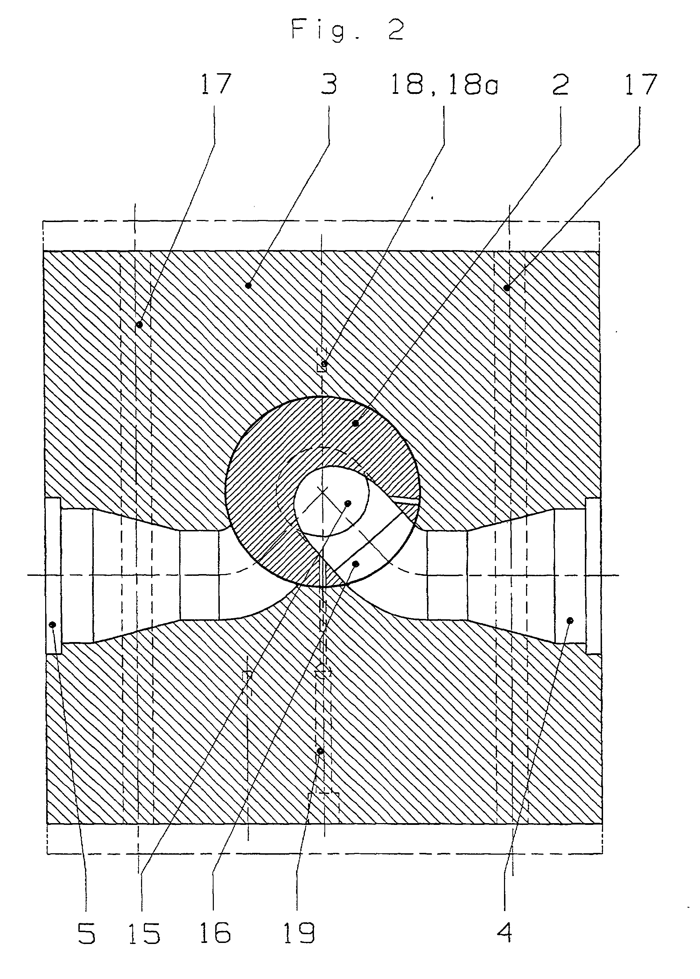

Figur 1 zeigt das erfindungsgemäße Schmelzeventil in einer bevorzugten Ausführungsform, wobei die Kunststoffschmelze am festen Flansch bzw. Schmelzeeingang 1 in das drehbare Hahnküken 2 eintritt und je nach Kükenstellung an der Austrittsöffnung 4 oder 5 am Gehäuse 3 wieder austritt. Das Küken wird über den Antrieb 6 und die getrieblichen Mittel 14 in die gewünschte Position gedreht, wobei der Antrieb sowohl motorisch als auch von Hand betrieben werden kann.

Die Spezialdichtungen 7 verhindern den Schmelzeaustritt nach außen bzw. in das Drucklager 8.

Zur Unterstützung der Dichtwirkung zwischen dem festen Flansch am Schmelzeeingang 1 und dem drehbaren Hahnküken 2 besitzt der feste Flansch eine Dichtlippe 9, welche so gestaltet ist, dass die Dichtwirkung zwischen der Dichtlippe 9 und dem Hahnküken 2 bei steigendem Schmelzdruck noch verstärkt wird. Der Spalt bzw. das Spiel zwischen dem Hahnküken 2 und dem Gehäuse 3 ist so gewählt, dass das Küken 2 sich gerade noch drehen lässt, aber ein Schmelzeaustritt durch den Spalt verhindert wird. Sollten doch geringste Mengen Schmelze in den Spalt eindringen, sind vor und hinter dem Schmelzeaustritt 4, 5 Leckagenuten 10 im Hahnküken 2 vorgesehen, die die Schmelze über Kanäle im Gehäuse 3 drucklos nach außen leiten können.

Im Drucklager 8 werden die Axialkräfte, die sich aus dem Schmelzdruck ergeben, aufgefangen. Eine Füllung des Lagers mit temperaturbeständigem Spezialschmierstoff garantiert eine ausreichende Dauerschmierung bei den auftretenden geringen Bewegungen und niederen Geschwindigkeiten.

Die Anschlagscheibe 11 ist mit dem Schaft 2a des Hahnkükens 2 fest verbunden und über die Stellschraube 12 lassen sich die Drehbewegungen des Kükens begrenzen bzw. einstellen.

Über die Scheibe des Drehwinkelgebers 13 lässt sich die Position des Kükens anhand einer Skala ablesen, wobei die Skala auch so ausgebildet sein kann, dass die Stellung des Kükens über elektronische Wegaufnehmer oder Schaltelemente außerhalb des gesamten Ventils angezeigt oder registriert werden kann.

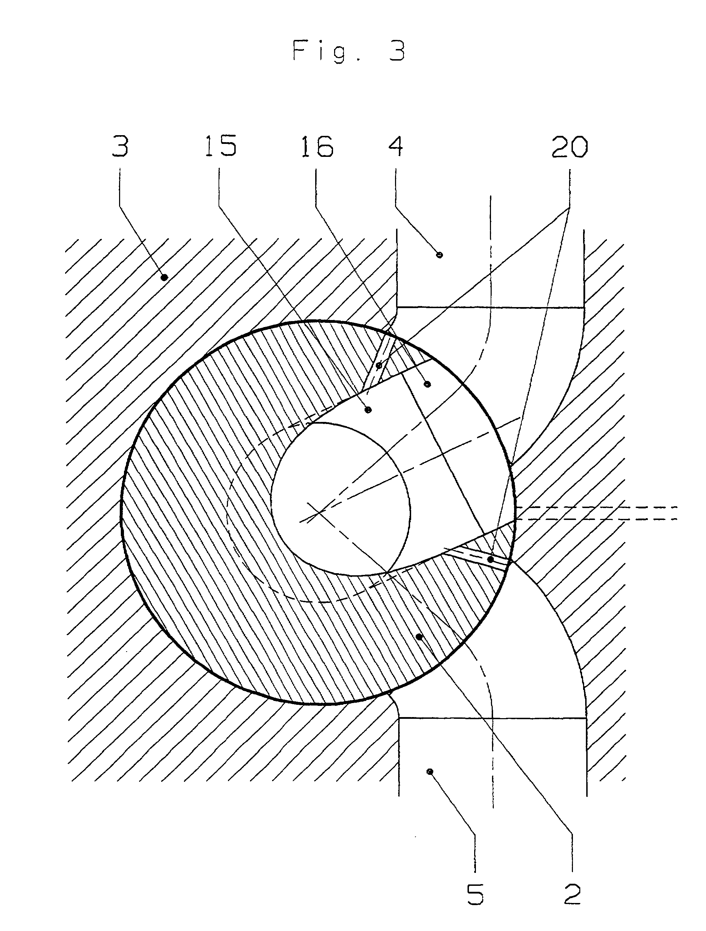

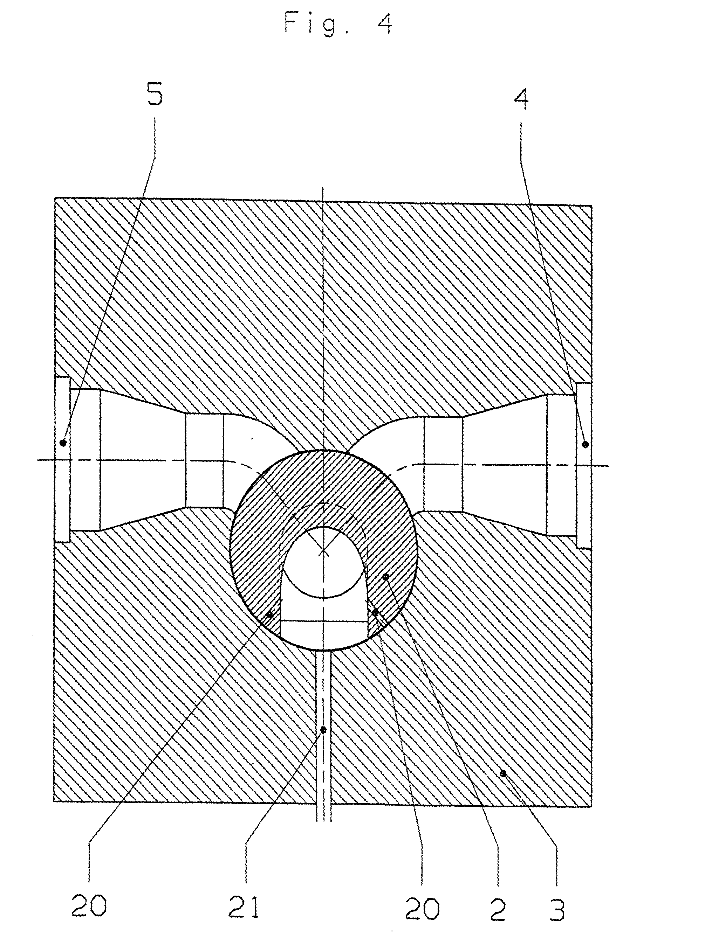

Figur 2 zeigt das Schmelzeventil in einem Querschnitt gemäß der Linie A-A durch das Gehäuse 3 und das Hahnküken 2. Dabei tritt die Schmelze in den zuströmseitigen Abschnitt 15 des Hahnkükens 2 ein und durch die Austrittskanäle 4 oder 5 wieder aus. Die Austrittskanäle 4 und 5 sind hier nicht gegenüberliegend, sondern unter einem Winkel von weniger als 180° angeordnet. Dadurch wird erstens der notwendige Drehwinkel des Kükens verkleinert und zweitens erreicht man dadurch bei geringerer Verdrehung des Küken 2 eine Teilüberdeckung des Abschnitts 15 und des abströmseitigen Abschnitts 16 mit beiden Austrittskanälen 4, 5.

Die Beheizung des Ventils erfolgt über Heizpatronen 17, wobei die Temperatur über Thermofühler 18, welche in die Bohrungen 18a eingesteckt sind, und über Temperaturregler geregelt wird.

Es ist auch wenigstens eine Leckagebohrung 19 vorhanden, welche die Schmelze bei eventuell auftretender Undichtigkeit nach unten hin, also aus der horizontalen Ebene in vertikaler Richtung ableitet.

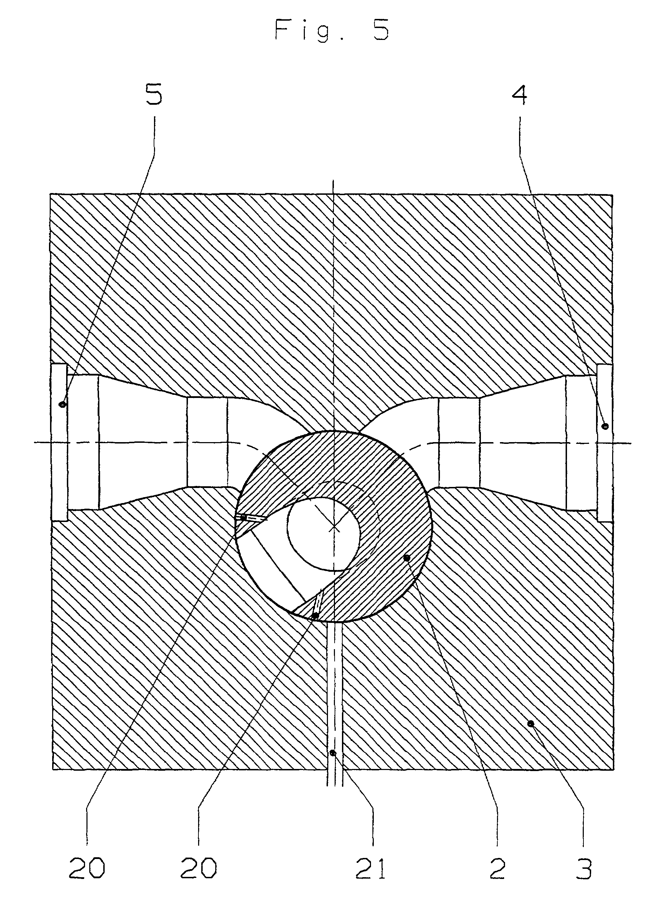

Figur 3 zeigt das Schmelzeventil in einem Querschnitt durch das Gehäuse 3 und das Hahnküken 2 mit zum Vorfluten geschwenktem Küken 2, wobei hier die Vorflutbohrungen 20 zum einen eine definierte Menge Schmelze in den Austrittskanal 5 fließen lässt und damit den Vorflut-Vorgang startet, und zum anderen im Austrittskanal 4 die Bildung von toten Ecken verhindert, da sie diese Bereiche mit Schmelze freispülen.

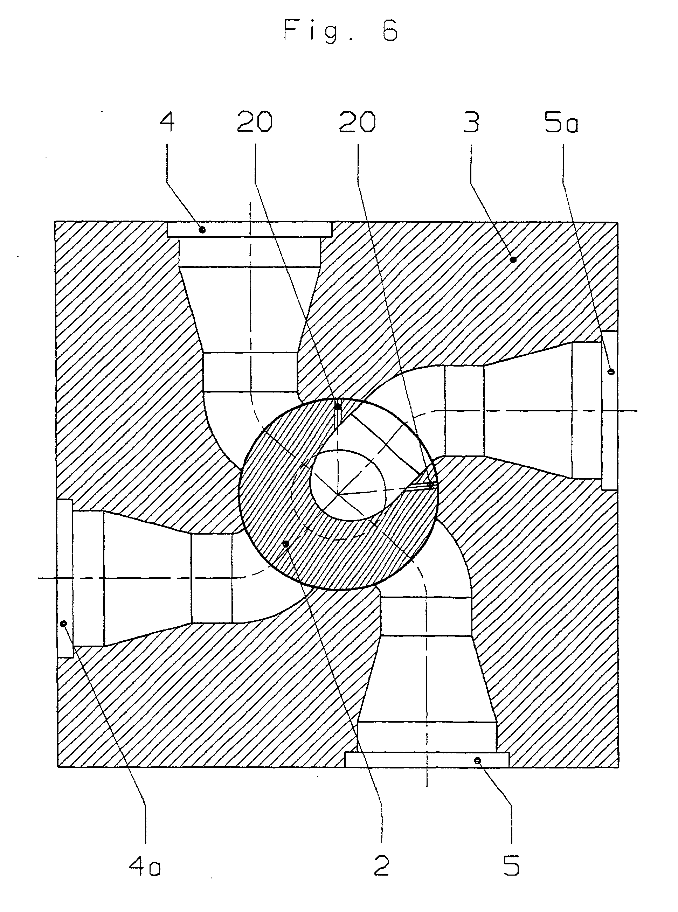

Figur 4 zeigt das Schmelzeventil in einem Querschnitt durch das Gehäuse 3 und das Hahnküken 2 in der das Küken 2 so geschwenkt ist, dass eine Entlüftungs- bzw. Spülbohrung 21 geöffnet ist und die Austrittsbohrungen 4, 5 verschlossen sind.

Figur 5 zeigt das Schmelzeventil in einem Querschnitt durch das Gehäuse 3 und das Hahnküken 2 in der Stellung des Kükens 2, bei dem alle Kanäle 4, 5 und die Bohrung 21 verschlossen sind.

Figur 6 zeigt einen Querschnitt durch das Gehäuse 3 und das Hahnküken 2 in einer anderen Ausführungsform des Ventils mit vier Ausgängen 4, 4a, 5, 5a, wobei sowohl die kükenseitigen als auch die gehäuseseitigen Ausgänge 4, 4a, 5, 5a jeweils um 90° versetzt zueinander angeordnet sind.

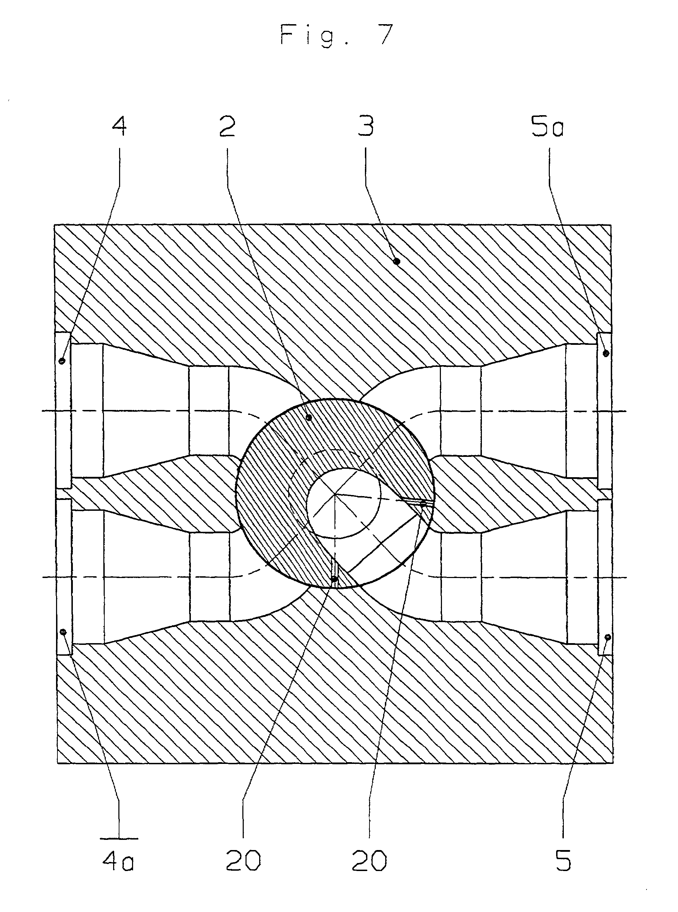

Figur 7 zeigt einen Querschnitt durch das Gehäuse 3 und das Hahnküken 2 in einer weiteren Ausführungsform des Ventils mit vier Ausgängen 4, 4a, 5, 5a, wobei je zwei Ausgänge 4, 4a und 5, 5a parallel zueinander und die zwei Paare 4, 4a und 5, 5a zueinander um 180° versetzt angeordnet sind.

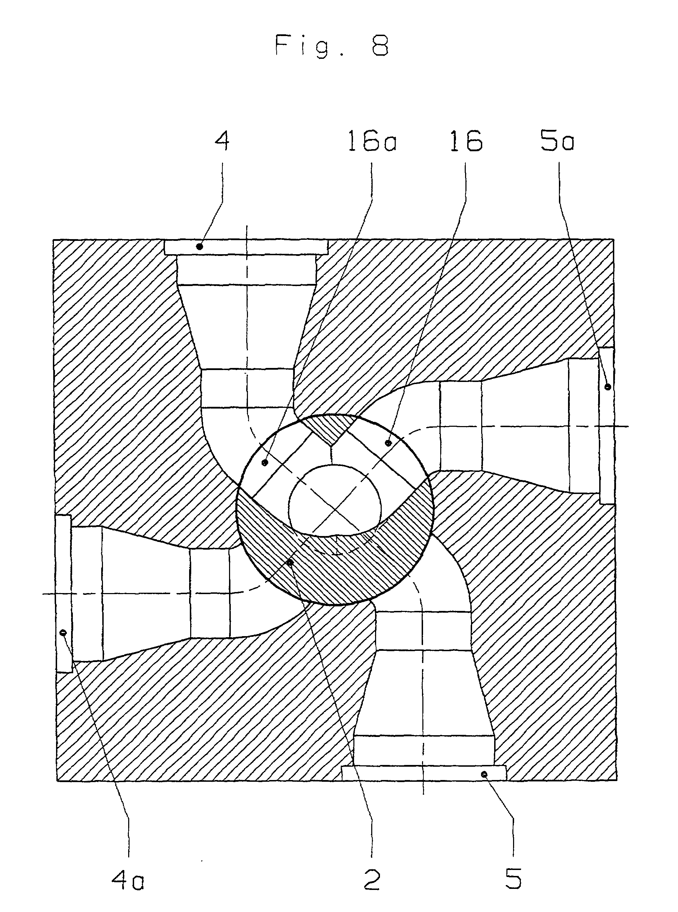

Figur 8 zeigt einen Querschnitt durch das Gehäuse 3 und das Hahnküken 2 in einer weiteren Ausführungsform des Ventils mit vier Ausgängen 4, 4a, 5, 5a und einem Doppelauslass 16,16a im Küken 2. Hierbei verbindet das Küken 2 seine zwei Austrittskanäle 16,16a jeweils mit zwei Austrittskanälen 4, 4a, 5, 5a des Gehäuses und somit sind die Verbindungen zwischen den Austrittskanälen 4, 4a und 4a, 5 und 5, 5a und 5a, 4 mit dem Eintrittskanal möglich.

### ZEICHNUNGSLEGENDE

- 1: Schmelzeeingang
- 2: Hahnküken
- 2a: Schaft
- 3: Gehäuse
- 4: Schmelzeausgang
- 4a: Schmelzeausgang
- 5: Schmelzeausgang
- 5a: Schmelzeausgang
- 6: Antrieb
- 7: Spezialdichtung
- 8: Drucklager
- 9: Dichtlippe
- 10: Leckagenut
- 11: Anschlagscheibe
- 12: Stellschraube
- 13: Drehwinkelgeber
- 14: getriebliche Mittel
- 15: zuströmseitiger Abschnitt
- 16: abströmseitiger Abschnitt
- 16a: abströmseitiger Abschnitt
- 17: Temperiermittel
- 18: Thermofühler
- 18a: Bohrung
- 19: Leckagebohrung
- 20: Vorflutbohrung
- 21: Spühlbohrung

## Patentansprüche

1. Schmelzeventil zum wahlweisen Zuführen eines fließfähig erschmolzenen thermoplastischen Kunststoffes zu wenigstens einem ersten und zweiten Schmelzefilter einer Anlage zum Herstellen flächenartiger thermoplastischer Produkte, mit einem im Ventilgehäuse (3) vorhandenen Schmelzeeingang (1) und wenigstens einem ersten Schmelzeausgang (4) und einem zweiten Schmelzeausgang (5), wobei die Verbindung zwischen dem Schmelzeeingang (1) und einem der Schmelzeausgänge (4,5) von einem im Ventilgehäuse (3) integrierten drehangetriebenen Hahnküken (2) mit wenigstens einem Strömungskanal hergestellt oder unterbrochen wird, wobei der wenigstens eine Strömungskanal des Hahnkükens einen zuströmseitigen Abschnitt (15) und einen abströmseitigen Abschnitt (16) besitzt, wobei der abströmseitige Abschnitt (16) koaxial zum hahnkükenseitigen Eingang der den jeweiligen Schmelzeausgang (4,5) aufweisenden Strömungskanäle zugeordnet ist und wobei das Ventil Mittel (17) zum Temperieren und Mittel (18) zur Regelung der Temperatur des Ventils besitzt, **dadurch gekennzeichnet, dass** der Schmelzeeingang (1) zur Drehachse des Hahnkükens (2) koaxial angeordnet ist und dass vom zuströmseitigen Abschnitt (15) Vorflutbohrungen (20) ausgehen, die bei vorgegebener Stellung des Hahnkükens gleichzeitig den ersten Schmelzeausgang (4) und den zweiten Schmelzeausgang (5) des Ventilgehäuses (3) mit dem zuströmseitigen Abschnitt (15) des Küken-Strömungskanals verbinden.

2. Schmelzeventil nach Anspruch 1, **dadurch gekennzeichnet, dass** weitere Schmelzeausgänge (4a,5a) im Ventilgehäuse (3) angeordnet sind.

3. Schmelzeventil nach Anspruch 1, und 2, **dadurch gekennzeichnet, dass** die Schmelzeausgänge (4,4a;5,5a) zueinander um 90° versetzt angeordnet sind.

4. Schmelzeventil nach Anspruch 1 und 2, **dadurch gekennzeichnet, dass** die Schmelzeausgänge (4,4a) und (5,5a) jeweils ein Paar von Schmelzeausgängen bilden und wobei die Ausgänge der Paare parallel zueinander angeordnet sind, und die beiden Paare zueinander um 180 ° versetzt sind.

5. Schmelzeventil nach Anspruch 1, **dadurch gekennzeichnet, dass** das Hahnküken (2) einen weiteren abströmseitigen Abschnitt (16a) besitzt, der zusammen mit dem abströmseitigen Abschnitt (16) je nach Position des Hahnkükens (2) zwei Schmelzeausgänge (4,4a;4,5a;4,5;5,5a;5,4a) miteinander verbindet.

6. Schmelzeventil nach Anspruch 1, **dadurch gekennzeichnet, dass** das Hahnküken (2) einen Schaft (2a) besitzt, der über getriebliche Mittel (14) mit einem Antrieb (6) wirkverbunden ist.

7. Schmelzeventil nach Anspruch 6, **dadurch gekennzeichnet, dass** der Antrieb (6) ein elektromotorischer Antrieb ist.

8. Schmelzeventil nach Anspruch 1, **dadurch gekennzeichnet, dass** eine Anschlagscheibe (11) drehfest mit dem Schaft (2a) zwischen dem Hahnküken (2) und den getrieblichen Mitteln (14) verbunden ist.

9. Schmelzeventil nach Anspruch 8, **dadurch gekennzeichnet, dass** die Drehbewegung der Anschlagscheibe (11) von einer Stellschraube (12) begrenzt ist.

10. Schmelzeventil nach Anspruch 1, **dadurch gekennzeichnet, dass** elektronische Wegmessaufnehmer oder Schaltelemente vorhanden sind, die die Position des Hahnkükens (2) anzeigen und/oder registrieren.

11. Schmelzeventil nach Anspruch 10, **dadurch gekennzeichnet, dass** der Wegmessaufnehmer ein mit dem Schaft (2a) drehfest verbundener Drehwinkelgeber (13) ist.

12. Vorrichtung zur Schmelzefiltration mit einem ersten und einem zweiten Schmelzefilter, **dadurch gekennzeichnet, dass** deren Schmelzeeingänge mit einem nach den Merkmalen der Ansprüche 1 bis 11 ausgebildeten ersten Schmelzeventil in Wirkverbindung stehen und dass deren Schmelzeausgänge mit einem zweiten Schmelzeventil wirkverbunden sind, wobei dessen Schmelzeeingang wahlweise der Schmelzeausgang (4) oder (5) und der Schmelzeausgang der Schmelzeeingang (1) des nach den Merkmalen der Ansprüche 1 bis 11 ausgebildeten Schmelzeventils ist, und wobei ferner das zweite Schmelzeventil auf Vorflutbohrungen (20) verzichtet.

13. Vorrichtung nach Anspruch 12, **dadurch gekennzeichnet, dass** der Schmelzeeingang (1) bzw. die Schmelzeeingänge (1), die Schmelzeausgänge (4,4a,5,5a) bzw. der Schmelzeausgang und der Antrieb (6) der betreffenden Hahnküken (2) in der horizontalen Ebene liegt (liegen).

## Claims

1. Melt valve for selective feed of a flowable molten thermoplastic plastics material to at least one first and second melt filter of an installation for producing sheet-like thermoplastic products, having a melt inlet (1) provided in the valve housing (3) and at least one first melt outlet (4) and one second melt outlet (5), wherein the connection between the melt inlet (1) and one of the melt outlets (4, 5) is produced or interrupted by a rotatably driven plug (2) having at least one flow channel and integrated in the valve housing (3), the at least one flow channel of the plug (15) having an inflow-side portion (15) and an outflow-side portion (16), wherein the outflow-side portion (16) is associated coaxially with respect to the plug-side inlet of the flow channels having the respective melt outlet (4, 5), and wherein the valve has means (17) for temperature control and means (18) for regulating the temperature of the valve, **characterised in that** the melt inlet (1) is arranged coaxially with respect to the axis of rotation of the plug (2) and from the inflow-side portion (15) there extend pre-flooding bores (20) which, in a defined position of the plug, simultaneously connect the first melt outlet (4) and the second melt outlet (5) of the valve housing (3) with the inflow-side portion (15) of the plug flow channel.

2. A melt valve according to Claim 1, **characterised in that** further melt outlets (4a, 5a) are arranged in the valve housing (3).

3. A melt valve according to Claims 1 and 2, **characterised in that** the melt outlets (4, 4a; 5, 5a) are arranged offset with respect to one another by 90°.

4. A melt valve according to Claims 1 and 2, **characterised in that** the melt outlets (4, 4a) and (5, 5a) form a respective pair of melt outlets and the outlets of the pairs are arranged parallel to one another, and the two pairs are offset with respect to one another by 180°.

5. A melt valve according to Claim 1, **characterised in that** the plug (2) has a further outflow-side portion (16a) which, together with the outflow-side portion (16), depending on the position of the plug (2), connects two melt outlets (4, 4a; 4, 5a; 4, 5; 5, 5a; 5, 4a) with one another.

6. A melt valve according to Claim 1, **characterised in that** the plug (2) has a spindle (2a) which is operatively connected to a drive (6) by way of gear means (14).

7. A melt valve according to Claim 6, **characterised in that** the drive (6) is an electromotive drive.

8. A melt valve according to Claim 1, **characterised in that** a stop disc (11) is non-rotatably connected to the spindle (2a) between the plug (2) and the gear means (14).

9. A melt valve according to Claim 8, **characterised in that** the rotary movement of the stop disc (11) is limited by an adjusting screw (12).

10. A melt valve according to Claim 1, **characterised in that** electronic displacement measuring sensors or switching elements are present, which indicate and/or register the position of the plug (2).

11. A melt valve according to Claim 10, **characterised in that** the displacement-measuring sensor is an angle-of-rotation transducer non-rotatably connected to the spindle (2a).

12. A device for melt filtration having a first and a second melt filter, **characterised in that** the melt inlets thereof are in operative connection with a first melt valve constructed in accordance with the features of Claims 1 to 11, and that the melt outlets thereof are in operative connection with a second melt valve, wherein the melt inlet thereof is selectively the melt outlet (4) or (5) and the melt outlet is the melt inlet (1) of the melt valve constructed in accordance with the features of Claims 1 to 11, and wherein furthermore the second melt valve omits pre-flooding bores (20).

13. A device valve according to Claim 12, **characterised in that** the melt inlet (1) or the melt inlets (1), the melt outlets (4, 4a, 5, 5a) or the melt outlet and the drive (6) of the plug (2) in question lies (lie) in the horizontal plane.

## Revendications

1. Soupape pour matière fondue pour amener de manière sélective une matière thermoplastique fondue fluide vers au moins un premier et un deuxième filtre de matière fondue d'une installation servant à fabriquer des produits thermoplastiques minces, comprenant une entrée de matière fondue (1) présente dans le corps de soupape (3) et au moins une première sortie de matière fondue (4) et une deuxième sortie de matière fondue (5), la liaison entre l'entrée de matière fondue (1) et l'une des sorties de matière fondue (4, 5) étant établie ou interrompue par un boisseau de robinet (2) commandé par rotation, intégré dans le corps de soupape (3), avec au moins un canal d'écoulement, ledit au moins un canal d'écoulement du boisseau de robinet possédant un segment côté arrivée (15) et un segment côté sortie (16), le segment côté sortie (16) étant disposé coaxialement à l'entrée côté boisseau des canaux d'écoulement présentant la sortie de matière fondue correspondante (4, 5), et la soupape possédant des moyens (17) pour équilibrer la température et des moyens (18) pour réguler la température de la soupape, **caractérisée en ce que** l'entrée de matière fondue (1) est disposée coaxialement à l'axe de rotation du boisseau de robinet (2) et **en ce que** des orifices d'écoulement (20) sortant du segment côté arrivée (15), relient en même temps, dans une position prédéterminée du boisseau de robinet, la première sortie de matière fondue (4) et la deuxième sortie de matière fondue (5) du corps de soupape (3) avec le segment côté arrivée (15) du canal d'écoulement du boisseau.

2. Soupape pour matière fondue selon la revendication 1, **caractérisée en ce que** d'autres sorties de matière fondue (4a, 5a) sont disposées dans le corps de soupape (3).

3. Soupape pour matière fondue selon la revendication 1 et la revendication 2, **caractérisée en ce que** les sorties de matière fondue (4, 4a ; 5, 5a) sont disposés décalées de 90° l'une par rapport à l'autre.

4. Soupape pour matière fondue selon la revendication 1 et la revendication 2, **caractérisée en ce que** les sorties de matière fondue (4, 4a) et (5, 5a) forment deux à deux un couple de sorties de matière fondue, les sorties des couples étant disposées parallèlement entre elles, et **en ce que** les deux couples sont disposés décalés de 180° l'un par rapport à l'autre.

5. Soupape pour matière fondue selon la revendication 1, **caractérisée en ce que** le boisseau de robinet (2) possède un autre segment côté sortie (16a) qui, avec le segment côté sortie (16), relie entre elles deux sorties de matière fondue (4, 4a ; 4, 5a ; 4, 5 ; 5, 5a ; 5, 4a) suivant la position du boisseau de robinet (2).

6. Soupape pour matière fondue selon la revendication 1, **caractérisée en ce que** le boisseau de robinet (2) possède une tige (2a) qui est reliée de manière active à un entraînement (6) par l'intermédiaire de moyens d'entraînement (14).

7. Soupape pour matière fondue selon la revendication 6, **caractérisé en ce que** l'entraînement (6) est un moteur électrique.

8. Soupape pour matière fondue selon la revendication 1, **caractérisée en ce qu'**une rondelle de butée (11) est reliée, de manière résistant à la rotation, à la tige (2a) entre le boisseau de robinet (2) et les moyens d'entraînement (14).

9. Soupape pour matière fondue selon la revendication 8, **caractérisée en ce que** le mouvement de rotation de la rondelle de butée (11) est limité par une vis de réglage (12).

10. Soupape pour matière fondue selon la revendication 1, **caractérisée en ce que** des capteurs de déplacement ou des éléments de commande électroniques sont présents, lesquels indiquent et/ou enregistrent la position du boisseau de robinet (2).

11. Soupape pour matière fondue selon la revendication 10, **caractérisée en ce que** le capteur de déplacement est un capteur d'angle de rotation (13) relié de manière fixe avec la tige (2a).

12. Dispositif pour la filtration de matière fondue avec un premier et un deuxième filtre de matière fondue, **caractérisé en ce que** ses entrées de matière fondue sont reliées de manière active avec une première soupape pour matière fondue formée conformément aux caractéristiques des revendications 1 à 11 et **en ce que** ses sorties de matière fondue sont reliées de manière active avec une deuxième soupape pour matière fondue, dont l'entrée de matière fondue est, au choix, la sortie de matière fondue (4) ou (5) et la sortie de matière fondue est l'entrée de matière fondue (1) de la soupape pour matière fondue formée conformément aux caractéristiques des revendications 1 à 11, la deuxième soupape pour matière fondue ne possédant pas, en outre, les orifices d'écoulement (20).

13. Dispositif selon la revendication 12, **caractérisé en ce que** l'entrée de matière fondue (1) respectivement les entrées de matière fondue (1), les sorties de matière fondue (4, 4a, 5, 5a), respectivement la sortie de matière fondue, et l'entraînement (6) des boisseaux de robinet (2) concernés sont situés dans le plan horizontal.
